# FASCICULE DE BREVET EUROPEEN

(11) **EP 0 503 995 B1**
(45) Date de publication et mention de la délivrance du brevet: **28.08.1996**
(21) Numéro de dépôt: 92400522.6
(22) Date de dépôt: 27.02.1992
(51) Int. Cl.: C01B 33/20, C01B 33/26, C01B 39/00, B01J 21/16

(54) **Phyllosilicates 2:1 dioctaédriques et leur procédé de préparation**
Dioktaedrische 2:1 Phyllosilikate und Verfahren zu ihrer Herstellung
Dioctahedral 2:1 phyllosilicates and process for their preparation

(30) Priorité: 14.03.1991 FR 9103236
(43) Date de publication de la demande: 16.09.1992
(73) Titulaire: INSTITUT FRANCAIS DU PETROLE, F-92502 Rueil-Malmaison (FR)
(72) Inventeur: Joly, Jean-François, F-75003 Paris (FR); Huve, Laurent, F-68200 Mulhouse (FR); Ledred, Ronan, F-68400 Riedisheim (FR); Saehr, Daniel, F-68400 Riedisheim (FR); Baron, Jacques, F-68100 Mulhouse (FR)
(74) Mandataire: Andreeff, François

(56) Documents cités:
- EP-A- 0 398 429
- FR-A- 2 185 660
- US-A- 3 887 454
- US-A- 4 033 858
- WORLD PATENTS INDEX LATEST Week 8805, Derwent Publications Ltd., London, GB; AN 88-032908 & JP-A-62292616

## Description

Les phyllosilicates 2:1 dioctaédriques sont des minéraux qui résultent de l'empilement de feuillets élémentaires. Chaque feuillet comprend deux couches tétraédriques situées de part et d'autre d'une couche octaédrique. La couche tétraédrique est constituée de tétraèdres △O₄, 3 sommets sur 4 étant communs à 2 tétraèdres et un sommet étant libre, △O_{(3/2+1)}, △ représentant une cavité tétraédrique et O un atome d'oxygène. La couche octaédrique est constituée d'octaèdres □0₆, les 6 sommets étant communs à 3 tétraèdres, □O_{6/3}, □ représentant une cavité octaédrique. En limitant le contenu du feuillet à une demi-maille, 4 tétraèdres △₄O₍₆₊₄₎ sont situés deux à deux de part et d'autre de 3 octaèdres □₃O₆ et ont en commun 4 sommets : △₄□₃O₍₁₂₎. Deux atomes O de la couche octaédrique ne participent pas à cette mise en commun et sont saturés pardes atomes H : △₄□₃O₁₀(OH)₂. Le plus souvent les cavités tétraédriques △ sont occupées par des atomes de silicium et 2 cavités octaédriques □ sur 3 par des atomes d'aluminium : Si₄Al₂□O₁₀(OH)₂. Cet édifice est électriquement neutre.

L'élément silicium tétraédrique peut être substitué par des éléments trivalents tels que par exemple l'aluminium ou le gallium. De même, l'élément aluminium octaédrique peut être substitué par des éléments divalents (Mg ou Fe par exemple) et/ou monovalents (Li par exemple). Ces substitutions confèrent des charges négatives à l'édifice. Celles-ci entraînent l'existence de cations de compensation échangeables situés dans l'espace interfoliaire. L'épaisseur de l'espace interfoliaire dépend de la nature des cations de compensation et de leur état d'hydratation. Cet espace est d'ailleurs capable d'accueillir d'autres espèces chimiques comme de l'eau, des amines, des sels, des alcools, des bases, etc..

L'existence de groupes -OH entraîne une instabilité thermique due à la réaction de déshydroxylation d'équation:

2 -OH ---> -O- + H₂O.

A cet égard l'introduction, lors de la synthèse, de l'élément fluor dans la structure en place des groupes O-H conduit à des phyllosilicates de stabilité thermique nettement améliorée.

Les phyllosilicates possèdent une structure microporeuse liée à la nature, au nombre et à la taille des cations de compensation. La variation de l'épaisseur de l'espace interfoliaire par l'échange des cations de compensation contre d'autres cations entraîne des changements des propriétés adsorbantes. Seules les molécules ayant certaines formes et certaines dimensions sont capables d'entrer dans l'espace interfoliaire. L'insertion de piliers (composés minéraux permettant d'écarter les feuillets) dans l'espace interfoliaire lui confère une épaisseur plus importante. Les phyllosilicates à piliers sont des solides microporeux dont les propriétés rejoignent celles des zéolithes. Les phyllosilicates sont utilisés comme solides microporeux en adsorption et en catalyse.

La composition chimique des phyllosilicates, par la nature des éléments présents dans les cavités tétraédriques et octaédriques et la nature des cations de compensation, est également un facteur important intervenant dans la sélectivité de l'échange de cations, dans la sélectivité d'adsorption et surtout dans l'activité catalytique. Ceci s'explique d'une part par la nature et l'intensité des interactions entre leurs surfaces interne et externe et d'autre part les molécules adsorbées. Les phyllosilicates sont utilisés comme catalyseurs ou supports de catalyseurs dans le craquage, dans la modification d'hydrocarbures ainsi que dans l'élaboration de nombreuses molécules.

Des gisements de phyllosilicates dioctaédriques sont connus. Cependant, leurs applications industrielles sont limitées par leur qualité variable, leur composition et la présence d'impuretés constituant des charges indésirables dans certains procédés. Ces problèmes sont à l'origine d'importantes recherches en vue de synthétiser des phyllosilicates ayant les qualités requises et les propriétés souhaitées.

Trois grandes méthodes de préparation des phyllosilicates sont distinguées: la transformation des minéraux existants, la synthèse en milieu fondu (absence d'eau, haute température et forte pression) et la synthèse hydrothermale.

La troisième méthode est la plus intéressante. Elle permet d'obtenir des phyllosilicates bien cristallisés dans des conditions opératoires modérées, proches de celles utilisées dans le cas des zéolithes, pour des durées de synthèse raisonnables.

La plupart des synthèse hydrothermales de phyllosilicates sont effectuées en milieu basique, c'est-à-dire en présence d'ions OH⁻, à des pH supérieurs à 7. Comme rappelé précédemment, la substitution de l'élément F aux groupes OH dans la structure améliore la stabilité thermique. L'élément fluor F peut être introduit dans la structure directement lors de la synthèse, à condition que le milieu de synthèse dudit phyllosilicate contienne au moins une source de cet élément.

Dès la fin du dix neuvième siècle, des micas ont été synthétisés en milieu fluoré. Ainsi la fluoromuscovite, mica dioctaédrique, est obtenue par chauffage d'un mélange de silicates fluorés (Doelter C., Ueber Glimmerbildung durch zusammenschmelzen sowie weitere silikatsynthesen, Neues Jarhb. Min. Pet. I, 179, 1888). Depuis une quarantaine d'années, les recherches concernant la synthèse de micas fluorés ont pris une importance industrielle considérable du fait de leurs propriétés (Jackel R.D. et Roy R., Silicate Science, Vol IV, 97, 1952). En 1972, la société BAROID Division N.L. Industries produit industriellement un minéral décrit comme un minéral interstratifé mica-montmorillonite, le BARASYM SMM 100, selon le brevet US-A-3252757. Ce brevet revendique la synthèse de phyllosilicates en milieu éventuellement fluoré de pH supérieur à 6,5, et de température comprise entre 280 et 315 °C, 285 °C étant la température optimale.

Plus récemment, la synthèse hydrothermale de phyllosillicates en milieu fluoré a fait l'objet de développements nouveaux. Deux brevets japonais (Torii Kazuo, JP 62 292 615 et JP 62 292 616) revendiquent une gamme de produits de type smectite obtenus en présence d'acide silicique, de sels d'aluminium et de magnésium, d'ions alkylammonium, de sels de métaux alcalins et alcalino-terreux, et éventuellement de sels fluorés. Toutes les synthèses sont réalisées en milieu basique (pH supérieur à 7).

Un milieu de synthèse basique n'est pas favorable à la cristallisation de phyllosilicates riches en élément silicium. Il est en effet bien connu que l'augmentation du pH du milieu de synthèse entraîne une diminution du rapport Si/Al dans le phyllosilicate qui cristallise. Ce fait est lié à la solubilité du phyllosilicate qui est d'autant plus grande en milieu basique que le rapport Si/Al est grand avec comme conséquence la chute du rendement de synthèse. En outre, l'utilisation d'un milieu de synthèse basique n'est pas favorable à l'obtention de phyllosilicates riches en élément fluor du fait de la concentration forte de ce milieu en ions OH⁻.

De nombreuses applications, particulièrement en catalyse acide, nécessitent des formes protonées et complétement débarrassées des cations de compensation introduits lors de la synthèse. Ces formes peuvent être obtenues par des procédés répétés et longs d'échanges de ces cations contre des ions NH₄⁺ suivis d'une calcination pour générer la forme protonée. La synthèse en présence d'ions NH₄⁺ est alors un avantage évident. Or ces ions NH₄⁺ n'existent qu'en milieu de pH inférieur à 9, au delà de ce pH les ions NH₄⁺ libèrent les molécules NH₃. De plus des synthèses effectuées dans des milieux à pH inférieurs à 9 sont souvent difficiles et longues à cause de la solubilité faible des éléments silicium et autres. L'utilisation d'anions F⁻ comme agents mobilisateurs de la silice et des autres éléments permet de réaliser des synthèses en présence d'ions NH₄⁺, en milieu neutre et acide.

Selon l'art antérieur, la synthèse de phyllosilicates 2:1 dioctaédriques en présence d'ions F⁻ s'effectue soit en milieu basique, soit en milieu de pH minimal égal à 6,5 et à des températures supérieures à 260 °C.

La présente invention a pour objet de nouveaux phyllosilicates 2:1 dioctaédriques et leur procédé de préparation qui confère de plus aux phyllosilicates 2:1 dioctaédriques selon l'invention des propriétés améliorées, particulièrement des propriétés acides et de stabilité thermique.

L'originalité de la présente invention, comme on le verra plus loin, est l'obtention de nouveaux pnyllosilicates 2:1 dioctaédriques en milieu fluoré et à pH inférieurs à 9 y compris à des pH correspondant à des milieux acides, en présence de l'acide HF et/ou d'une autre source d'anions F⁻ et à des températures inférieures à 270 °C. Dans les conditions de synthèse de la présente invention, le taux de substitution tétraédrique des pnyllosilicates 2:1 dioctaédriques obtenus peul être avantageusement contrôlé par la nature du cation de compensation (par exemple Li⁺, Na⁺, K⁺, NH₄⁺, TEA⁺ ou Ca²⁺), introduit lors de la synthèse, et le pH du milieu.

Les phyllosilicates 2:1 dioctaédriques selon l'invention sont notamment caractérisés par :
a) la formule chimique générale approchée suivante (pour une demi-maille):

   M^{m+}_{x/m}((Si₍₄₋ₓ₎Tₓ)(T₂□₁)O₁₀(OH_{(2-y)}F_{y}))^{x-},nH₂O

   où T représente un élément choisi dans le groupe formé par le groupe IIIA de la classification périodique des éléments (tels que par exemple les éléments bore, aluminium, gallium) el le fer,
   M est au moins un cation de compensation issu du milieu réactionnel, ou introduit par au moins un procédé d'échange ionique, choisi dans le groupe formé par les cations des éléments des groupes IA, IIA et VIII de la classification périodique des éléments, les calions de terres rares (calions d'éléments de numéro atomique de 57 à 71 inclus), les calions organiques contenant de l'azote (parmi lesquels les alkylammonium et les arylammonium), et le cation ammonium.
   où m est la valence du cation M,
   où x est un nombre compris entre 0 et 2, de préférence entre 0,1 et 0,8 ; y est un nombre non nul compris entre 0 et 2, et où n est un nombre positif ou nul.
b) un diagramme de diffraction des rayons X caractérisé par la présence des raies suivantes:
   - une raie correspondant à une valeur de dₕₖₗ égale à 1,52 ± 0,01.10⁻¹⁰ m dans le cas où T est Ga ou à 1,49 ± 0,01 10⁻¹⁰ m dans le cas où T n'est pas Ga,
   - deux autres raies à des valeurs de dₕₖₗ égales à 4,46 ± 0,02 10⁻¹⁰ m et 2,56 ± 0,015 10⁻¹⁰ m
   - au moins une reflexion 001 telle que d₀₀₁ soit égal à 12,5 ± 3 10⁻¹⁰ m suivant la nature du cation de compensation et de son état d'hydratation à l'humidité considérée.
c) une teneur en fluor celle que le rapport molaire F⁻/Si est compris entre 0,1 et 4, et de préférence entre 0,1 et 1,
d) au moins un signal en RMN, rotation à l'angle magique, du ¹⁹F, à - 104 ppm (±5 ppm) dans le cas où T est Ga ou à - 133 ppm (± 5 ppm) dans le cas où T n'est pas Ga.

Ils sont également caractérisés par un milieu de synthèse fluoré dans lequel est présent l'acide HF, à un pH inférieur ou égal à 9 et de façon générale compris entre 0,5 et 9.

L'invention concerne également un procédé de préparation desdits phyllosilicates 2:1 dioctaédriques qui consiste en ce que :
a) on forme un mélange réactionnel en solution aqueuse ayant un pH inférieur à 9, comprenant notamment de l'eau, au moins une source de l'élément silicium, au moins une source d'un élément T choisi de préférence dans le groupe formé par les éléments du groupe IIIA de la classification périodique des éléments et le fer, et au moins une source d'ions F⁻, au moins une source de l'acide HF, éventuellement au moins une source d'un cation de compensation. Ce dernier est choisi dans le groupe formé par les cations des éléments des groupes IA, IIA et VIII de la classification périodique des éléments, les cations de terres rares (cations d'éléments de numéro atomique de 57 à 71 inclus), les cations organiques contenant de l'azote (parmi lesquels les alkylammonium et les arylammonium) et le cation ammonium. Tout autre cation d'origine organique contenant de l'azote pouvant procurer des effets similaires peut aussi être utilisé.
   Ledit mélange a une composition, en termes de rapport molaire, comprise dans les intervalles de valeurs suivants :
   Si/T : 0,1 - 100, de préférence 0,1 - 8,
   F⁻ₜₒₜₐₗ/Si : 0,1 - 10, de préférence 0,1 - 8,
   M^{m+}/Si : 0 - 10, de préférence 0 - 4,
   H₂O/Si : 5 - 100, de préférence 10 - 50,
   HF/Si : 0,1 - 10, de préférence 0,1 - 8.

   F⁻ₜₒₜₐₗ représente la somme des ions F⁻, provenant de l'acide HF et éventuellement d'une seconde source d'ions F⁻ ajoutée à cet acide HF.
b) on maintient ledit mélange réactionnel à une température comprise entre 160 et 270 °C, et de préférence comprise entre 180 et 240 °C, jusqu'à ce que l'on obtienne un composé cristallin, et
c) ledit composé est échangé et calciné à une température supérieure à 350 °C et, de préférence, supérieure à 450°C, par exemple sous un mélange d'air et d'azote.

La présence de l'élément F, apporté au moins par l'acide HF au cours de l'étape de synthèse, dans les phyllosilicates 2:1 dioctaédriques selon l'invention confère auxdits phyllosilicates une propriété de stabilité thermique nettement améliorée par rapport aux phyllosilicates 2:1 dioctaédriques préparés selon l'art antérieur. De même, les propriétés d'acidité des phyllosilicates 2:1 dioctaédriques selon l'invention sont considérablement améliorées par rapport à celle des solides phyllosilicates 2:1 dioctaédriques de l'art antérieur; ce que montrent la thermodésorption de l'ammoniac et la spectroscopie infrarouge de bases faibles adsorbées (CO, H₂S).

Par des traitements particuliers, il serait possible d'éliminer tout ou partie du fluor contenu dans les phyllosilicates 2:1 dioctaédriques selon l'invention sans altérer leur cristallinité. Une technique que l'on peut utiliser pour défluorer lesdits solides consiste à traiter les phyllosilicates 2:1 dioctaédriques par une solution aqueuse diluée d'ammoniac (rapport volume de solution sur masse de solide compris entre 5 et 20 cm³/g) à une température comprise entre 100 et 200 °C (traitement sous pression).

On peut avantageusement chauffer le mélange réactionnel dans un autoclave revêtu intérieurement de polytétrafluoroéthylène entre 160 et 270 °C, et de préférence entre 180 et 240 °C, pendant une durée qui peut varier de quelques heures à quelques jours selon la température de réaction, jusqu'à l'obtention d'un composé cristallisé que l'on sépare des eaux mères et qui est ensuite lavé à l'eau distillé puis séché.

De manière avantageuse, on peut préparer ledit mélange réactionnel à un pH compris entre 0,5 et 9, et de manière préférée entre 0,5 et 6,5.

Selon un mode préféré de la préparation de phyllosilicates 2:1 dioctaédriques selon l'invention, les rapports molaires des constituants du mélange réactionnel sont compris dans les intervalles de valeurs suivants:
Si/T: 0,5 - 2,
F⁻ₜₒₜₐₗ/Si : 0,1 - 4,
M^{m+}/Si : 0 - 2,
H₂O/Si : 20 - 50,
HF/Si : 0,1 - 4.

F⁻ₜₒₜₐₗ représente la somme des ions F⁻, provenant de l'acide HF et éventuellement d'une seconde source ions F⁻ ajoutée à cet acide HF.

On peut avantageusement travailler en milieu agité, éventuellement en présence de germes constitués de cristaux de phyllosilicates 2:1 dioctaédriques.

Le pH du milieu réactionnel, inférieur à 9, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de l'élément silicium peuvent être utilisées, parmi lesquelles on peut citer à titre d'exemple les silices sous forme d'hydrogels, d'aérogels, de suspensions colloïdales, les silices résultant de la précipitation de solutions de silicates solubles ou de l'hydrolyse d'esters siliciques comme Si(OC₂H₅)₄ ou de complexes comme (NH₄)₂SiF₆, les silices préparées par des traitements d'extraction de composés naturels ou synthétiques comme les silicates d'aluminium, les aluminosilicates, les zéolithes.

Parmi les sources de l'élément bore, on peut utiliser par exemple l'oxyde B₂O₃, l'acide H₃BO₃, des sels comme le borax, le tétraborate d'ammonium ou des molécules hydrolysables comme BF₃, BCl₃ et des esters de l'acide H₃BO₃ comme le triéthylborate.

Parmi les sources de l'élément aluminium que l'on peut utiliser, on peut citer des oxydes, des hydroxydes, des hydroxy-oxydes d'aluminium, des aluminates, des sels d'aluminium, des esters comme le tripropylaluminate.

Parmi les sources de l'élément gallium, on peut utiliser des oxydes, des hydroxydes, des hydroxy-oxydes, des gallates, des sels et des esters.

Parmi les sources de l'élément fer, on peut utiliser des oxydes, des hydroxydes-oxydes, des hydroxydes, des sels.

Au lieu d'utiliser des sources séparées des divers éléments cités ci-dessus, on peut utiliser des sources dans lesquelles au moins deux éléments sont associés.

Les ions alkylammonium et arylammonium sont ajoutés au mélange réactionnel sous forme d'un de leurs sels (comme par exemple le fluorohydrate de tétraéthylammonium) ou de leur hydroxyde. On peut aussi ajouter au moins une amine qui est ensuite transformée in situ en cation lors de l'ajustement du pH à une valeur inférieure à 9.

Les anions fluorure (F⁻) sont ajoutés sous forme de l'acide HF. Ils proviennent éventuellement d'une autre source : des sels de métaux alcalins (par exemple NaF), de sels NH₄F, NH₄HF₂, de fluorhydrates d'amines ou des composés hydrolysables dans l'eau et pouvant libérer des ions F⁻.

La calcination, étape c) de la préparation décrite ci-avant, se déroule avantageusement à une température comprise entre 450 et 650 °C sous gaz sec, comme par exemple l'air ou un gaz inerte.

Après l'étape d'élimination des composés organiques (étape c) de la préparation décrite ci-avant) et éventuellement après un traitement de défluoration partielle ou totale, on peut introduire dans les phyllosilicates 2:1 dioctaédriques selon l'invention, par des techniques d'échanges ioniques bien connues de l'art antérieur, au moins un élément de la classification périodique choisi dans le groupe formé par les terres rares et les éléments des groupes IA, IIA, VIII, IB, IIB, IIIB, et IVB de la classification périodique des éléments dont le cation peut être préparé en milieu aqueux, et les composés de ces éléments. Par exemple, on peut introduire un cation choisi dans le groupe formé par les cations des métaux alcalins, les cations alcalino-terreux, les cations de terres rares, Co(II), Pt(IV).

L'identification des phyllosilicates 2:1 dioctaédriques selon l'invention peut se faire de manière aisée à partir de leur diagramme de diffraction des rayons X sur poudre non orientée préférentiellement. Ce diagramme de diffraction peut être obtenu à l'aide d'un diffractomètre en utilisant la méthode classique des poudres avec le rayonnement Kα du cuivre. Un étalon interne permet de déterminer précisemment les valeurs de 2θ associées aux pics de diffraction. Les distances interréticulaires dₕₖₗ sont calculées à partir de la relation de Bragg.

Les phyllosilicates 2:1 dioctaédriques selon la présente invention sont caractérisés par la présence dans leur spectre de diffraction des rayons X d'au moins les raies suivantes:
- une raie correspondant à une valeur de dₕₖₗ égale à 1,52 ± 0,01.10⁻¹⁰ m dans le cas où T est Ga ou à 1,49 ± 0,01 10⁻¹⁰ m dans le cas où T n'est pas Ga,
- deux autres raies à des valeurs de dₕₖₗ égales à 4,46 ± 0,02 10⁻¹⁰ m et 2,56 ± 0,015 10⁻¹⁰ m
- au moins une réflexion 001 telle que d₀₀₁ soit égal à 12,5 + 3 10⁻¹⁰ m suivant la nature du cation de compensation et son état d'hydratation à l'humidité relative considérée.

Les exemples suivants illustrent l'invention sans toutefois en limiter la portée.

### Exemple 1

A 36 ml d'eau distillée, on ajoute successivement et conformément aux indications fournies :
- 0,30 g du sel LiF (Prolabo) sous agitation modérée,
- 0,42 g de l'acide HF à 40% (Fluka),
- 2,46 g de l'oxyde AlOOH (Catapal B Alumina de Vista) sous agitation vigoureuse, et
- 2,50 g de l'oxyde SiO₂ pulvérulent (Aerosil 30 de Degussa) sous agitation modérée.

La composition de l'hydrogel ainsi préparé, rapportée à une mole d'oxyde SiO₂ est:
1,0 SiO₂ ; 0,40 Al₂O₃ ; 0,27 LiF ; O,20 HF ; 48 H₂O
soit en termes de rapport molaire :
Si/Al = 1,25
Li⁺/Si = 0,25
F⁻/Si = 0,47
HF/Si = 0,20
H₂O/Si = 48

Cette composition ne tient pas compte de l'eau apportée par la source d'aluminium et par l'acide HF.

L'hydrogel ainsi obtenu est mûri 4 heures à la température ambiante (20 °C) sous agitation modérée. Le pH est alors voisin de 4.

La cristallisation s'effectue ensuite dans un autoclave en acier, chemisé par un revêtement de téflon, d'une contenance de 120 ml, à 220 °C, sous pression autogène durant 168 heures sans agitation. L'autoclave est ensuite refroidi à l'air ambiant.

Le pH de fin de synthèse est d'environ 5.

Le produit est ensuite récupéré, filtré et lavé abondamment à l'eau distillé. Il est alors séché à 40-50 °C durant 24 heures.

Au bout de ces 24 heures, le produit obtenu, à 50% d'humidité relative, est caractérisé par son diagramme de diffraction des rayons X indiqué ci-après :

| dₖₕₗ (Å) | I/Io |
|---|---|
| 12,31 | 100 |
| 6,06 | 8 |
| 4,46 | 87 |
| 3,16 | 6 |
| 3,06 | 9 |
| 2,57 | 35 |
| 2,51 | 34 |
| 2,33 | 4 |
| 2,27 | 4 |
| 2,20 | |
| 1,68 | 16 |
| 1,58 | |
| 1,49 | 31 |

Ce diffractogramme est caractéristique de celui des phyllosilicates 2:1 dioctaédriques selon l'invention.

Les propriétés de gonflement du phyllosilicate obtenu sont reportées dans le tableau ci-dessous:

| | HR 50% | HR 80% | 14% glycérol dans l'éthanol |
|---|---|---|---|
| dₕₖₗ (A) | 12,3 | 15,5 | 18,1 |
| HR : humidité relative | | | |

La teneur pondérale en fluor du phyllosilicate obtenu est de 2,07 %.

Un signal à -133 pmm est présent dans le spectre de RMN, rotation à l'angle magique, du ¹⁹F du phyllosilicate préparé selon cet exemple.

### Exemple 2

A 36 g d'eau distillée, on ajoute successivement et conformément aux indications fournies :
- 0,31 g du sel NaF (Prolabo) sous agitation modérée,
- 0,66 g de l'acide HF à 40% (Fluka),
- 2,35 g de l'oxyde AlOOH (Catapal B Vista) sous agitation vigoureuse,
- 2,50 g de l'oxyde SiO₂ pulvérulent (Aerosil 130 de Degussa), sous agitation modérée.

La composition de l'hydrogel ainsi préparé, rapportée à une mole de l'oxyde SiO₂ est :
1,0 SiO₂ ; 0,382 Al₂O₃ ; 0,177 NaF ; O,20 HF ; 48 H₂O
soit en termes de rapport molaire :
Si/Al = 1,309
Na⁺/Si = 0,177
F⁻/Si = 0,497
HF/Si = 0,32
H₂O/Si = 48

Cette composition ne tient pas compte de l'eau apportée par la source d'aluminium et par l'acide HF.

L'hydrogel ainsi obtenu est mûri 4 heures à la température ambiante (20 °C) sous agitation modérée. Le pH est alors voisin de 5.

La cristallisation s'effectue ensuite dans un autoclave en acier, chemisé par un revêtement de téflon, d'une contenance de 120 ml, à 220 °C, sous pression autogène durant 68 heures sans agitation. L'autoclave est ensuite refroidi à l'air ambiant.

Le pH de fin de synthèse est d'environ 4.

Le produit est ensuite récupéré, filtré et lavé abondamment à l'eau distillée. Il est alors séché à 40-50 °C durant 24 heures.

Au bout de ces 24 heures, le produit obtenu, à 50% d'humidité relative, est caractérisé par son diagramme de diffraction des rayons X indiqué ci-après :

| dₖₕₗ (Å) | I/Io |
|---|---|
| 12,42 | 100 |
| 6,22 | 6 |
| 4,46 | 55 |
| 2,55 | 21 |
| 2,48 | 15 |
| 2,25 | 2 |
| 2,22 | 3,5 |
| 1,74 | 5 |
| 1,73 | 6 |
| 1,69 | 13 |
| 1,66 | 7 |
| 1,62 | 2 |
| 1,48 | 20 |

Ce diffractogramme est caractéristique de celui des phyllosilicates 2:1 dioctaédriques selon l'invention.

Les propriétés de gonflement du phyllosilicate obtenu sont reportées dans le tableau ci-dessous:

| | HR 50% | HR 80% | 14% glycérol dans l'éthanol |
|---|---|---|---|
| dₕₖₗ (A) | 12,4 | 15,5 | 17,6 |
| HR : humidité relative | | | |

La teneur pondérale en fluor du phyllosilicate obtenu est de 3,15 %.

Un signal à -133 pmm est présent dans le spectre de RMN, rotation à l'angle magique, du ¹⁹F du phyllosilicate préparé selon cet exemple.

### Exemple 3

A 36 g d'eau distillée, on ajoute successivement et conformément aux indications fournies :
- 7,5 g de l'hydroxyde de tétraéthylammonium à 40% sous agitation modérée,
- 3,1 g de l'acide HF à 40% (Fluka),
- 1,54 g de l'oxyde AlOOH (Catapal B Vista) sous agitation vigoureuse,
- 2,50 g de l'oxyde SiO₂ pulvérulent (Aerosil 130 de Degussa), sous agitation modérée.

La composition de l'hydrogel ainsi préparé, rapportée à une mole de l'oxyde SiO₂ est :
1,0 SiO₂ ; 0,25 Al₂O₃ ; 0,49 TEAOH ; 1,49 HF ; 48 H₂O
soit en termes de rapport molaire :
Si/Al = 12
TEA⁺/Si = 0,49
F⁻/Si = 1,49
HF/Si = 1,49
H₂O/Si = 48

Cette composition ne tient pas compte de l'eau apportée par la source d'aluminium et par l'acide HF.

L'hydrogel ainsi obtenu est mûri 4 heures à la température ambiante (20 °C) sous agitation modérée. Le pH est alors voisin de 4,5.

La cristallisation s'effectue ensuite dans un autoclave en acier, chemisé par un revêtement de téflon, d'une contenance de 120 ml, à 220 °C, sous pression autogène durant 44 heures sans agitation. L'autoclave est ensuite refroidi à l'air ambiant.

Le pH de fin de synthèse est d'environ 7.

Le produit est ensuite récupéré, filtré et lavé abondamment à l'eau distillée. Il est alors séché à 40-50 °C durant 24 heures.

Au bout de ces 24 heures, le produit obtenu, à 50% d'humidité relative, est caractérisé par son diagramme de diffraction des rayons X indiqué ci-après :

| dₖₕₗ (Å) | I/Io |
|---|---|
| 14,40 | 100 |
| 6,10 | 4 |
| 4,81 | 5 |
| 4,45 | 30 |
| 3,52 | 7 |
| 2,86 | 4 |
| 2,56 | 11 |
| 2,36 | 5 |
| 2,33 | 3 |
| 2,23 | 3 |
| 1,69 | 3 |
| 1,49 | 10 |

Ce diffractogramme est caractéristique de celui des phyllosilicates 2:1 dioctaédriques selon l'invention.

La teneur en fluor n'a pas été déterminée.

Un signal à -133 pmm est présent dans le spectre de RMN, rotation à l'angle magique, du ¹⁹F du phyllosilicate préparé selon cet exemple.

### exemple 4

A 36 g d'eau distillée, on ajoute successivement et conformément aux indications fournies :
- 1,2 g du sel KF (Prolabo) sous agitation modérée,
- 0,2 g de l'acide HF à 40% (Fluka),
- 3,1 g de l'oxyde AlOOH (Catapal B Vista) sous agitation vigoureuse,
- 2,50 g de l'oxyde SiO₂ pulvérulent (Aerosil 130 de Degussa), sous agitation modérée.

La composition de l'hydrogel ainsi préparé, rapportée à une mole de l'oxyde SiO₂ est :
1,0 SiO₂ ; 0,5 Al₂O₃ ; 0,5 KF ; O,43 HF ; 48 H₂O
soit en termes de rapport molaire :
Si/Al = 1
K⁺/Si = 0,5
F⁻/Si = 0,93
HF/Si = 0,43
H₂O/Si = 48

Cette composition ne tient pas compte de l'eau apportée par la source d'aluminium et par l'acide HF.

L'hydrogel ainsi obtenu est mûri 4 heures à la température ambiante (20 °C) sous agitation modérée. Le pH est alors voisin de 3.

La cristallisation s'effectue ensuite dans un autoclave en acier, chemisé par un revêtement de téflon, d'une contenance de 120 ml, à 220 °C, sous pression autogène durant 192 heures sans agitation. L'autoclave est ensuite refroidi à l'air ambiant.

Le pH de fin de synthèse est d'environ 6.

Le produit est ensuite récupéré, filtré et lavé abondamment à l'eau distillée. Il est alors séché à 40-50 °C durant 24 heures.

Au bout de ces 24 heures, le produit obtenu, à 50% d'humidité relative, est caractérisé par son diagramme de diffraction des rayons X indiqué ci-après :

| dₖₕₗ (Å) | I/Io |
|---|---|
| 11,18 | 56 |
| 4,47 | 100 |
| 3,94 | 8 |
| 3,18 | 19 |
| 2,82 | 2 |
| 2,56 | 69 |
| 2,55 | 72 |
| 2,52 | 46 |
| 2,23 | 12 |
| 2,21 | |
| 1,86 | 10 |
| 1,69 | 10 |
| 1.62 | |
| 1,49 | 37 |

Ce diffractogramme est caractéristique de celui des phyllosilicates 2:1 dioctaédriques selon l'invention.

La teneur en fluor n'a pas été déterminée.

Un signal à -133 pmm est présent dans le spectre de RMN, rotation à l'angle magique, du ¹⁹F du phyllosilicate préparé selon cet exemple.

### Exemple 5

A 36 g d'eau distillée, on ajoute successivement et conformément aux indications fournies :
- 0,397 g du sel NH₄F (Prolabo) sous agitation modérée,
- 0,31 g de l'acide HF à 40% (Fluka),
- 2,69 g de l'oxyde AlOOH (Catapal B Vista) sous agitation vigoureuse,
- 2,50 g de l'oxyde SiO₂ pulvérulent (Aerosil 130 de Degussa), sous agitation modérée.

La composition de l'hydrogel ainsi préparé, rapportée à une mole de l'oxyde SiO₂ est :
1,0 SiO₂ ; 0,437 Al₂O₃ ; 0,25 NH₄F ; O,15 HF ; 48 H₂O
soit en termes de rapport molaire :
Si/Al = 1,14
NH₄⁺/Si = 0,25
F⁻/Si = 0,40
HF/Si = 0,15
H₂O/Si = 48

Cette composition ne tient pas compte de l'eau apportée par la source d'aluminium et par l'acide HF.

L'hydrogel ainsi obtenu est mûri 4 heures à la températutre ambiante (20 °C) sous agitation modére. Le pH est alors voisin de 7,5.

La cristallisation s'effectue ensuite dans un autoclave en acier, chemisé par un revêtement de téflon, d'une contenance de 120 ml, à 220 °C, sous pression autogène durant 192 heures sans agitation. L'autoclave est ensuite refroidi à l'air ambiant.

Le pH de fin de synthèse est d'environ 8,5.

Le produit est ensuite récupéré, filtré et lavé abondamment à l'eau distillée. Il est alors séché à 40-50 °C durant 24 heures.

Au bout de ces 24 heures, le produit obtenu, à 50% d'humidité relative, est caractérisé par son diagramme de diffraction des rayons X indiqué ci-après :

| dₖₕₗ (Å) | I/Io |
|---|---|
| 10,87 | 73 |
| 5,32 | 12 |
| 4,46 | 100 |
| 2,58 | 30 |
| 2,56 | 43 |
| 2,24 | 6 |
| 2,17 | 7 |
| 2,07 | 7 |
| 1,69 | 11 |
| 1,49 | 22 |

Ce diffractogramme est caractéristique de celui des phyllosilicates 2:1 dioctaédriques selon l'invention.

La teneur pondérale en fluor du phyllosilicate obtenu est de 1,3 %.

Un signal à -133 pmm est présent dans le spectre de RMN, rotation à l'angle magique, du ¹⁹F du phyllosilicate préparé selon cet exemple.

### Exemple 6

A 14,4 g d'eau distillée, on ajoute successivement et conformément aux indications fournies :
- 0,246 g du sel NH₄F (Prolabo) sous agitation modérée,
- 0,08 g de l'acide HF à 40 % (Fluka),
- 1,71 g de l'oxyde GaOOH fraîchement préparé par voie hydrothermale à partir de gallium métal 99,99 dissous dans l'acide HNO₃ à 70 % ( ) sous agitation vigoureuse,
- 1,0 g de l'oxyde SiO₂ pulvérulent (Aérosil 130 de Degussa), sous agitation modérée.

La composition de l'hydrogel ainsi préparé, rapporté à une male de l'oxyde de SiO₂ est :
1,0 SiO₂ ; 0,5 Ga₂O₃ ; 0,4 NH₄F ; 0,1 HF ; 48 H₂O.
soit en termes de rapport molaire :
- Si/Ga: = 1,00
- NH₄⁺/Si: = 0,40
- F⁻/Si: = 0,50
- HF/Si: = 0,10
- H₂O/Si: = 48

Cette composition ne tient pas compte de l'eau apportée par la source de gallium et par l'acide HF.

L'hydrogel ainsi obtenu est mûri 4 heures à la température ambiante (20° C) sous agitation modérée. Le pH est alors voisin de 6,5.

La cristallisation s'effectue ensuite dans un autoclave en acier, chemisé par un revêtement de téflon, d'une contenance de 120 ml, à 220° C, sous pression autogène durant 144 heures sans agitation. L'autoclave est ensuite refroidi à l'air ambiant.

Le pH de synthèse est d'environ 5,0.

Le produit est ensuite récupéré, filtré et lavé abondamment à l'eau distillée. Il est alors séché à 40-50° C durant 24 heures.

Au bout de ces 24 heures, le produit obtenu, à 50 % d'humidité relative, est caractérisé par son diagramme de diffraction des rayons X dont les raies principales sont indiquées ci-après :

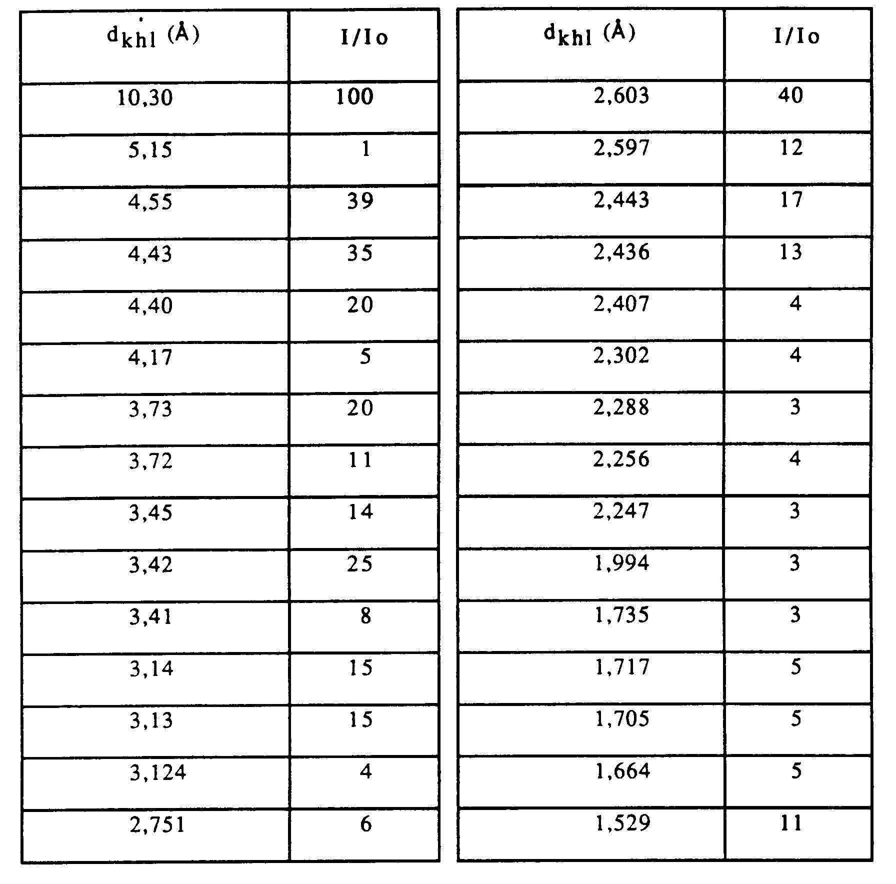

Ce diffractogramme est caractéristique de celui des phyllosilicates 2:1 dioctaédriques contenant du gallium selon l'invention.

La teneur pondérale en fluor du phyllosilicate obtenu est de 2.2 %. Un signal à -104 ppm est présent dans le spectre de RMN, rotation à l'angle magique, du ¹⁹F du phyllosilicate préparé selon cet exemple.

## Revendications

1. Phyllosilicates 2:1 dioctaédriques cristallisés caractérisés par :
a) la formule chimique générale approchée suivante (pour une demi-maille):
M^{m+}_{x/m}((Si₍₄₋ₓ₎Tₓ)(T₂□₁)O₁₀(OH_{(2-y)}F_{y}))^{x-},nH₂O
où □ représente une cavité octaédrique,
où T représente un élément choisi dans le groupe formé par le IIIA de la classification périodique des éléments et le fer,
où M est au moins un cation de compensation issu du milieu réactionnel, ou introduit par au moins un procédé d'échange ionique, choisi dans le groupe formé par les cations de métaux alcalins, les cations alcalino-terreux, les cations de métaux du groupe VIII de la classification périodique des éléments, le proton, les cations organiques contenant de l'azote, et le cation ammonium,
où m est la valence du cation M,
où x est un nombre compris entre 0 et 2 ; y est un nombre compris entre 0 et 2, différent de 0, et n est un nombre supérieur ou égal à 0.
b) un diagramme de diffraction des rayons X caractérisé par la présence des raies suivantes:
- une raie correspondant à une valeur de dₕₖₗ égale à 1,52 ± 0,01.10⁻¹⁰ m dans le cas où T est Ga ou à 1,49 ± 0,01 10⁻¹⁰ m dans le cas où T n'est pas Ga,
- deux autres raies à des valeurs de dₕₖₗ égales à 4,46 ± 0,02 10⁻¹⁰ m et 2,56 ± 0,015 10⁻¹⁰ m
- au moins une reflexion 001 telle que d₀₀₁ soit égal à 12,5 ± 3 10⁻¹⁰ m suivant la nature du cation de compensation et son état d'hydratation à l'humidité considérée.
c) une teneur en fluor telle que le rapport molaire F⁻/Si est compris entre 0,1 et 4,
d) au moins un signal en RMN, rotation à l'angle magique, du ¹⁹F, à - 104 ppm (±5 ppm) dans le cas où T est Ga ou à - 133 ppm (± 5 ppm) dans le cas où T n'est pas Ga,
lesdits phyllosilicates ayant été synthétisés en milieu fluoré en présence de l'acide HF et à un pH inférieur à 9.

2. Phyllosilicates 2:1 dioctaédriques cristallisés selon la revendication 1 où x est un nombre compris entre 0,1 et 0,8.

3. Phyllosilicates 2:1 dioctaédriques cristallisés selon l'une des revendications 1 et 2 dont la teneur en fluor est telle que le rapport molaire F/Si est compris entre 0,1 et 1.

4. Catalyseur renfermant un phyllosilicate 2:1 dioctaédrique selon l'une des revendications 1 à 3 et une matrice.

5. Catalyseur renfermant un phyllosilicate 2:1 dioctaédrique selon l'une des revendications 1 à 3, une matrice et au moins un produit choisi dans le groupe formé par les terres rares et les éléments des groupes IA, IIA, VIII, IB, IIB, IIIB, et IVB de la classification périodique des éléments et les composés de ces métaux.

6. Procédé de préparation de phyllosilicates 2:1 dioctaédriques selon l'une des revendications 1 à 3 caractérisé en ce que:
a) on forme un mélange réactionnel en solution aqueuse ayant un pH inférieur à 9, comprenant notamment de l'eau, au moins une source de l'élément silicium, au moins une source d'un élément T choisi dans le groupe formé par les éléments du groupe IIIA et le fer, au moins une source de l'acide HF, éventuellement au moins une source d'ions F⁻, au moins une source d'un cation de compensation, ledit mélange ayant une composition, en termes de rapport molaire, comprise dans les intervalles de valeurs suivants :
Si/T : 0,1 - 100,
F⁻ₜₒₜₐₗ/Si : 0,1 - 10,
M^{m+}/Si : 0 - 10,
H₂O/Si : 5 - 100,
HF/Si : 0,1 - 10,
F⁻ₜₒₜₐₗ représentant la somme des ions F⁻, provenant de l'acide HF et éventuellement d'une seconde source d'ions F⁻ ajoutée à cet acide HF.
b) on maintient ledit mélange réactionnel à une température comprise entre 180 et 240 °C, jusqu'à ce que l'on obtienne un composé cristallin, et
c) ledit composé est échangé et calciné à une température supérieure à 350 °C

7. Procédé selon la revendication 6 dans lequel, dans l'étape a), ledit mélange réactionnel a une composition, en termes de rapport molaire, comprise dans les intervalles de valeurs suivants:
Si/T : 0,1 - 8,
F⁻ₜₒₜₐₗ/Si : 0,1 - 8,
M^{m+}/Si : 0 - 4,
H₂O/Si : 10 - 50,
HF/Si : 0,1 - 8,
F⁻ₜₒₜₐₗ représentant le somme des ions F⁻, provenant de l'acide HF et éventuellement d'une seconde source d'ions F⁻ ajoutée à cet acide HF.

8. Procédé selon l'une des revendications 6 ou 7 dans lequel, dans l'étape a), ledit mélange réactionnel a une composition, en termes de rapport molaire, comprise dans les intervalles de valeurs suivants :
Si/T : 0,5 - 2,
F⁻ₜₒₜₐₗ/Si : 0,1 - 4,
M^{m+}/Si : 0 - 2,
H₂O/Si : 20 - 50,
HF/Si : 0,1 - 4,
F⁻ₜₒₜₐₗ représentant la somme des ions F⁻, provenant de l'acide HF et éventuellement d'une seconde source d'ions F⁻ ajoutée à cet acide HF.

9. Procédé selon l'une des revendications 7 à 9 dans lequel, à l'étape c), ledit composé est échangé et calciné à une température comprise entre 450 et 650°C sous gaz sec.

## Claims

1. Crystallised dioctahedral 2:1 phyllosilicates characterized by:
a) the following approximate general chemical formula (for a half-mesh):
M^{m+}_{x/m}(Si₍₄₋ₓ₎Tₓ)(T₂□₁)O₁₀(OH_{(2-y)}F_{y}))^{x-},nH₂O
wherein □ represents an octahedral cavity,
T represents an element selected from the group formed by IIIA of the periodic system of elements and iron,
M is at least one compensation cation from the reaction medium or introduced by at least one ion exchange process selected from the group formed by cations of alkali metals, alkaline-earth cations, cations of metals of group VIII of the periodic system of elements, the proton, organic cations containing nitrogen, and the ammonium cation,
m is the valence of the cation M, and
x is a number of between 0 and 2; y is a number between 0 and 2 different from 0 and n is a number which is higher than or equal to 0;
b) an X-ray diffraction diagram characterized by the presence of the following lines:
- a line corresponding to a value of dₕₖₗ equal to 1.52 ± 0.01.10⁻¹⁰ m in the case where T is Ga or 1.49 ± 0.01 10⁻¹⁰ in the case where T is not Ga,
- two other lines with values of dₕₖₗ equal to 4,46 ± 0.02 10⁻¹⁰ m and 2.56 ± 0.015 10⁻¹⁰ m,
- at least one reflection 001 such that d₀₀₁ is equal to 12.5 ± 3 10⁻¹⁰ m, according to the nature of the compensation cation and its state of hydration at the moisture level in question,
c) a fluorine content such that the molar ratio F⁻/Si is between 0.1 and 4,
d) at least one NMR signal, rotation to the magic angle, of ¹⁹ F, at -104 ppm (± 5 ppm) in the case where T is Ga or -133 ppm (± 5 ppm) in the case where T is not Ga,
said phyllosilicates having been synthesised in a fluorine-bearing medium in the presence of HF acid and at a pH of lower than 9.

2. Crystallized dioctahedral 2:1 phyllosilicates according to claim 1 wherein x is a number between 0.1 and 0.8.

3. Crystallized dioctahedral 2:1 phyllosilicates according to one of claims 1 and 2 wherein the fluorine content is such that the molar ratio F/Si is between 0.1 and 1.

4. A catalyst containing a dioctahedral 2:1 phyllosilicate according to one of claims 1 to 3 and a matrix.

5. A catalyst containing a dioctahedral 2:1 phyllosilicate according to one of claims 1 to 3, a matrix and at least one product selected from the group formed by rare earths and the elements of groups IA, IIA, VIII, IB, IIB, IIIB and IVB of the periodic system of elements and the compounds of such metals.

6. A process for the preparation of dioctahedral 2:1 phyllosilicates according to one of claims 1 to 3 characterised in that:
a) a reaction mixture is formed in an aqueous solution having a pH of less than 9, comprising in particular water, at least one source of the element silicon, at least one source of an element T selected from the group formed by the elements of group IIIA and iron, at least one source of HF acid, optionally at least one source of F⁻ions, and at least one source of a compensation cation,
said mixture being of a composition in terms of molar ratio within the following ranges of values:
Si/T: 0.1 - 100
F⁻ₜₒₜₐₗ/Si: 0.1 - 10
M^{m+}/Si: 0 - 10
H₂O/Si: 5 - 100
HF/Si: 0.1 - 10
F⁻ₜₒₜₐₗ representing the sum of the ions F⁻ coming from the HF acid and optionally a second source of F⁻ions which is added to said HF acid,
b) said reaction mixture is maintained at a temperature of between 180 and 240°C until a crystalline compound is obtained, and
c) said compound is exchanged and roasted at a temperature of higher than 350°C.

7. A process according to claim 6 wherein, in step a), said reaction mixture is of a composition in terms of molar ratio within the following ranges of values:
Si/T: 0.1 - 8
F⁻ₜₒₜₐₗ/Si: 0.1 - 8
M^{m+}/Si: 0 - 4
H₂O/Si: 10 - 50
HF/Si: 0.1 - 8
F⁻ₜₒₜₐₗ representing the sum of the ions F⁻ coming from the HF acid and optionally a second source of F⁻ions which is added to said HF acid.

8. A process according to one of claims 6 and 7 wherein, in step a), said reaction mixture is of a composition in terms of molar ratio within the following ranges of values:
Si/T: 0.5 - 2
F⁻ₜₒₜₐₗ/Si: 0.1 - 4
M^{m+}/Si: 0 - 2
H₂O/Si: 20 - 50
HF/Si: 0,1 - 4
F⁻ₜₒₜₐₗ representing the sum of the ions F⁻ coming from the HF acid and optionally a second source of F⁻ions which is added to said HF acid.

9. A process according to one of claims 1 to 7 wherein in step c) said compound is exchanged and roasted at a temperature of between 450 and 650°C in dry gas.

## Patentansprüche

1. Kristallisierte dioktaedrische 2:1 Phyllosilicate, gekennzeichnet durch:
a) die folgende allgemeine chemische Überschlagsformel (für eine Halbzelle):
M^{m+}_{x/m}((Si₍₄₋ₓ₎Tₓ)(T₂□₁)O₁₀(OH_{(2-y)}F_{y}))^{x-},nH₂O,
worin □ einen oktaedrischen Hohlraum darstellt,
worin T ein Element darstellt, das aus der durch die Gruppe IIIA des Periodensystems und Eisen gebildete Gruppe ausgewählt ist,
worin M wenigstens ein Ausgleichskation ist, das aus dem Reaktionsmilieu stammt oder durch wenigstens ein Ionenaustauschverfahren eingeführt ist, das aus der Gruppe ausgewählt ist, die durch die Alkalimetallkationen, die Erdalkalimetallkationen, die Metallkationen der Gruppe VIII des Periodensystems, das Proton, die Stickstoff enthaltenden organischen Kationen und das Ammoniumkation gebildet ist,
worin m die Wertigkeit des Kations M ist,
worin x eine zwischen 0 und 2 enthaltene Zahl ist, y, verschieden von 0, eine zwischen 0 und 2 enthaltene Zahl ist und n eine Zahl von größer oder gleich 0 ist,
b) ein Röntgenbeugungsdiagramm, gekennzeichnet durch die Anwesenheit der folgenden Spektrallinien:
- eine Spektrallinie, die einem Wert von dₕₖₗ von gleich 1,52 ± 0,01 x 10⁻¹⁰ m für den Fall, daß T Ga oder von gleich 1,49 ± 0,01 x 10⁻¹⁰ m für den Fall, daß T nicht Ga ist, entspricht,
- zwei weiteren Spektrallinien bei Werten von dₕₖₗ von gleich 4,46 ± 0,02 x 10⁻¹⁰m und 2,56 ± 0,015 x 10⁻¹⁰m,
- wenigstens eine Reflexion 001, sodaß d₀₀₁ gleich 12,5 ± 3 x 10⁻¹⁰ m gemäß der Natur des Ausgleichskations und seinem Hydratationszustand bei betrachteter Feuchtigkeit sei,
c) einen Gehalt an Fluor, sodaß das Molverhältnis F⁻/Si zwischen 0,1 und 4 enthalten ist,
d) wenigstens ein Signal im ¹⁹F-NMR, Rotation unter magischem Winkel, bei -104 ppm (±5 ppm) für den Fall, daß T Ga ist oder bei - 133 ppm (±5 ppm) für den Fall, daß T nicht Ga ist,
wobei die Phyllosilicate in Fluoridmilieu in Gegenwart der Säure HF und bei einem pH-Wert von unter 9 hergestellt worden sind.

2. Kristallisierte dioktaedrische 2:1 Phyllosilicate gemäß Anspruch 1, worin x eine zwischen 0,1 und 0,8 liegende Zahl ist.

3. Kristallisierte dioktaedrische 2:1 Phyllosilicate gemäß einem der Ansprüche 1 und 2, deren Gehalt an Fluor so ist, daß das Molverhältnis F⁻/Si zwischen 0,1 und 1 liegt.

4. Katalysator, der ein dioktaedrisches 2:1 Phyllosilicat gemäß einem der Ansprüche 1 bis 3 und eine Matrix umfaßt.

5. Katalysator, der ein dioktaedrisches 2:1 Phyllosilicat gemäß einem der Ansprüche 1 bis 3, eine Matrix und wenigstens ein Produkt umfaßt, daß aus der Gruppe ausgewählt ist, die durch die Seltenerden und die Elemente der Gruppen IA, IIA, VIII, IB, IIB, IIIB und IVB des Periodensystems und den Verbindungen dieser Metalle gebildet ist.

6. Verfahren zur Herstellung von dioktaedrischen 2:1 Phyllosilicaten gemäß einem der Ansprüche 1 bis 3, dadurch gekennzeichnet, daß
a) man eine Reaktionsmischung in wäßriger Lösung bildet, die einen pH-Wert von unter 9 besitzt und insbesondere Wasser, wenigstens eine Quelle des Elementes Silicium, wenigstens eine Quelle eines Elementes T, ausgewählt aus der Gruppe, die durch die Elemente der Gruppe IIIA und Eisen gebildet ist, wenigstens eine Quelle der Säure HF, gegebenenfalls wenigstens eine F⁻-Ionenquelle, wenigstens eine Quelle eines Ausgleichskations umfaßt, wobei die Mischung in Molverhältnis eine Zusammensetzung besitzt, die in den folgenden Werteintervallen enthalten ist,
Si/T: 0,1 - 100,
F⁻_{gesamt}/Si: 0,1 - 10,
M^{m+}/Si: 0 - 10,
H₂O/Si: 5 - 100,
HF/Si: 0,1 - 10,
wobei F⁻_{gesamt} die Summe von F⁻-Ionen darstellt, die aus der Säure HF und gegebenenfalls einer zweiten Quelle von F⁻-Ionen, welche der Säure HF zugegeben werden, stammen,
b) man die Reaktionsmischung bei einer Temperatur hält, die zwischen 180 und 240°C liegt, bis man eine kristalline Verbindung erhält und
c) die Verbindung ausgetauscht und bei einer Temperatur oberhalb von 350°C kalziniert wird.

7. Verfahren gemäß Anspruch 6, worin im Schritt a) die Reaktionsmischung in Molverhältnis eine Zusammensetzung besitzt, die in den folgenden Werteintervallen enthalten ist:
Si/T: 0,1 - 8,
F⁻_{gesamt}/Si: 0,1 - 8,
M^{m+}/Si: 0 - 4,
H₂O/Si: 10 - 50,
HF/Si: 0,1 - 8,
wobei F⁻_{gesamt} die Summe der F⁻-Ionen darstellt, die aus der Säure HF und gegebenenfalls einer zweiten Quelle von F⁻-Ionen, welche der Säure HF zugegeben werden, stammt.

8. Verfahren nach einem der Ansprüche 6 oder 7, worin im Schritt a) die Reaktionsmischung in Molverhältnis eine Zusammensetzung besitzt, die in den folgenden Werteintervallen enthalten ist
Si/T: 0,5 - 2,
F⁻_{gesamt}/Si: 0,1 - 4,
M^{m+}/Si: 0 - 2,
H₂O/Si: 20 - 50,
HF/Si: 0,1 - 4,
wobei F⁻_{gesamt} die Summe der F⁻-Ionen darstellt, welche von der Säure HF und gegebenenfalls einer zweiten Quelle von F⁻-Ionen, welche der Säure HF zugegeben werden, stammen.

9. Verfahren gemäß einem der Ansprüche 7 bis 9, worin beim Schritt c) die Verbindung ausgetauscht und bei einer Temperatur die zwischen 450 und 650°C liegt, und unter trockenem Gas kalziniert wird.
